Europäisches Patentamt

European Patent Office

Office européen des brevets

(19)

(11) Numéro de publication: **0 133 065**
**B1**

(12) **FASCICULE DE BREVET EUROPEEN**

(45) Date de publication du fascicule du brevet: **18.04.90**

(51) Int. Cl.⁵: **A 47 C 7/54**, B 60 N 2/46

(21) Numéro de dépôt: **84401321.9**

(22) Date de dépôt: **22.06.84**

(54) **Accoudoir réglable escamotable et siège équipé d'un tel accoudoir.**

(30) Priorité: **19.07.83 FR 8311910**

(43) Date de publication de la demande:
**13.02.85 Bulletin 85/07**

(45) Mention de la délivrance du brevet:
**18.04.90 Bulletin 90/16**

(84) Etats contractants désignés:
**DE GB IT**

(56) Documents cités:
**FR-A-2 315 241**

(73) Titulaire: **AUTOMOBILES CITROEN**
**62 Boulevard Victor-Hugo**
**F-92200 Neuilly-sur-Seine (FR)**

(73) Titulaire: **AUTOMOBILES PEUGEOT, Société dite:**
**75, Avenue de la Grande-Armée**
**F-75761 Paris Cedex 16 (FR)**

(72) Inventeur: **Miclot, André Louis**
**12, place des Myrtilles**
**F-78310 Maurepas Village (FR)**

(74) Mandataire: **Durand, Yves Armand Louis et al**
**Cabinet Z. Weinstein 20, Avenue de Friedland**
**F-75008 Paris (FR)**

Courier Press, Leamington Spa, England.

## Description

La présente invention a essentiellement pour objet un accoudoir réglable et escamotable monté à rotation sur le côté du dossier d'un siège, tel que par exemple un siège avant de véhicule automobile.

Elle vise également un siège équipé d'un accoudoir conforme aux principes de l'invention.

On connaît déjà d'après le document FR-A-2.287.193 par exemple des accoudoirs réglables et escamotables qui peuvent être montés à rotation sur un dossier de siège par l'intermédiaire de moyens d'articulation permettant à l'utilisateur de mettre l'accoudoir en position orthogonale au plan du dossier de siège, c'est-à-dire en position de service, ou bien en position éclipsée ou escamotée le long du côté du dossier de siège, dans quel cas l'accoudoir rétablit la continuité de deux dossiers adjacents en s'insérant entre ces derniers.

Toutefois, les moyens d'articulation de l'accoudoir sur le dossier du siège présentaient un certain nombre d'inconvénients parmi lesquels on peut citer la complexité et le nombre des, pièces entrant en jeu dans le mécanisme d'articulation, de sorte que le montage et le réglage de l'accoudoir étaient bien souvent difficiles et compliqués. En outre, et comme on le comprend, la complexité des mécanismes d'articulation proposés pour les accoudoirs entraînait des coûts prohibitifs avec en plus le risque d'une fiabilité de fonctionnement aléatoire après un certain temps, c'est-à-dire après de nombreuses manoeuvres de l'accoudoir.

La présente invention a pour but de remédier à ces inconvénients en proposant un mécanisme d'articulation pour accoudoir qui se compose d'un nombre minimum de pièces très simples et peu coûteuses, et qui, au surplus, confère à l'accoudoir une excellente fiabilité de fonctionnement même après de nombreuses années.

A cet effet, l'invention a pour objet un accoudoir réglable et escamotable monté à rotation sur un dossier de siège pour véhicule par exemple, et cela par l'intermédiaire de moyens d'articulation revêtant la forme de deux organes solidaires du flanc de dossier du siège et d'un élément élastique permettant à l'accoudoir de prendre notamment une position de service et une position éclipsée le long du dossier, caractérisé en ce que lesdits moyens d'articulation comprennent d'une part un élément élastiquement déformable en forme de boucle ouverte ou d'épingle comportant du côté ouvert deux branches divergentes cintrées ou courbées attelées à une armature noyée dans l'accoudoir avec ledit élément, et d'autre part deux organes, tels que par exemple des galets, solidaires du flanc du dossier du siège et susceptibles de coopérer avec l'intérieur des deux branches divergentes de l'élément déformable en forme d'épingle sous l'effet de la rotation et de la translation de l'accoudoir en vue de permettre son réglage et son escamotage.

Suivant une autre caractéristique de l'invention, les deux branches divergentes cintrées ou courbées forment respectivement du côté ouvert de l'épingle un logement provisoire pour le premier et le deuxième galets, et forment du côté fermé de l'épingle une pince à brins sensiblement parallèles réalisant un couloir ou une piste de translation pour les deux galets.

On comprend donc déjà que l'accoudoir pourra être mis en place très commodément par l'insertion des galets entre les branches divergentes et élastiques de l'épingle; qu'on pourra ensuite faire basculer l'accoudoir puisque les deux galets rouleront respectivement sur les deux branches divergentes et déformables de l'épingle; et que ce basculement pourra être effectué jusqu'à ce que les deux galets roulent dans la portion d'épingle en forme de couloir, ce qui correspond à une position de l'accoudoir qui est orthogonale au plan général du dossier, étant entendu qu'à ce stade, et comme on le verra plus loin, l'avancée et l'inclinaison de l'accoudoir par rapport au dossier du siège peuvent être réglées facilement par l'utilisateur pour procurer la meilleure sensation de confort possible.

Selon encore une autre caractéristique de l'invention, les extrémités libres des deux branches de l'épingle sont attelées à l'armature avec de préférence un certain degré de liberté de mouvement par rapport à cette armature, tandis que l'extrémité fermée de l'épingle ou du couloir précité est elle aussi fixée à ladite armature.

Suivant une réalisation préférée, l'armature et l'élément en forme d'épingle sont respectivement situés dans deux plans orthogonaux.

Plus précisément, l'élément en forme d'épingle est situé dans un plan orthogonal à la surface supérieure de l'accoudoir, tandis que le plan de l'armature noyée dans l'accoudoir est sensiblement parallèle à ladite surface.

Suivant encore une autre caractéristique de l'invention, l'armature précitée présente la forme d'un cadre annulaire dont un segment est constitué par l'élément précité en forme d'épingle attaché à ce cadre par les extrémités libres des branches de l'épingle d'une part et par l'extrémité fermée du couloir précité d'autre part.

On ajoutera ici qu'au moins l'un des brins parallèles du couloir précitée est pourvu de crans d'arrêt permettant avantageusement de choisir la position de service désirée de l'accoudoir et correspondant à un confort maximum pour l'utilisateur, comme on l'a expliqué précédemment.

On précisera encore ici que la fixation au cadre des extrémités des branches divergentes et de la pince de l'élément en forme d'épingle est assurée par des pattes enveloppantes.

Ces pattes permettront aux extrémités libres de l'épingle de se mouvoir librement lors de la rotation de l'accoudoir qui pourra prendre telle ou telle position intermédiaire entre la position escamotée et de service afin de permettre à l'utilisateur d'avoir commodément accès à des organes divers sous ou au voisinage de l'accoudoir, comme par exemple le frein à main du véhicule ou le verrou des ceintures de sécurité.

Suivant encore une autre caractéristique de l'accoudoir conforme à l'invention, l'élément en forme d'épingle noyé dans cet accoudoir est par exemple constitué par un ressort filiforme présentant de préférence une section transversale circulaire, tandis que les deux galets coopérant avec l'intérieur de l'épingle comportent une gorge périphérique épousant ladite section.

L'invention vise également un siège pour un véhicule automobile par exemple et dont le dossier est équipé d'au moins un accoudoir répondant à l'une ou l'autre des caractéristiques susmentionnées.

Mais d'autres caractéristiques et avantages de l'invention apparaîtront mieux dans la description détaillée qui suit et se réfère aux dessins annexés, donnés uniquement à titre d'exemple, et dans lesquels:

La figure 1 est une vue en élévation du mécanisme d'articulation logé dans l'accoudoir, ce dernier étant montré en position escamotée ou hors service le long du côté d'un dossier de siège.

La figure 2 est une vue identique à la figure 1, mais montrant le mécanisme d'articulation lorsque l'accoudoir se trouve dans une position intermédiaire entre la position escamotée et de service.

La figure 3 est une vue identique aux figures 1 et 2 mais montrant le mécanisme d'articulation lorsque l'accoudoir est en position de service, c'est-à-dire orienté suivant une direction orthogonale au plan général du dossier de siège.

La figure 4 est une vue en plan de dessus du mécanisme d'articulation de l'accoudoir.

La figure 5 est une vue de côté et en élévation d'un siège de véhicule dont le dossier comporte un accoudoir latéral conforme à l'invention et représenté en position de service.

La figure 6 est une vue identique à la figure 5 mais montrant diverses positions possibles pour ledit accoudoir.

Suivant l'exemple de réalisation représenté, un accoudoir 1 conforme aux principes de l'invention est fixé latéralement sur le côté ou flanc 2 d'un dossier de siège 3 par l'intermédiaire de moyens d'articulation comprenant essentiellement: un élément élastiquement déformable ou ressort 4 en forme de boucle ouverte ou d'épingle solidaire d'une armature 5 noyée dans l'accoudoir 1 avec l'élément 4; et deux galets 6, 7 solidaires du côté 2 du dossier 3 du siège et susceptibles de coopérer avec l'intérieur de l'élément 4 en forme d'épingle sous l'effet de la rotation et aussi de la translation de l'accoudoir 1 par rapport au dossier du siège.

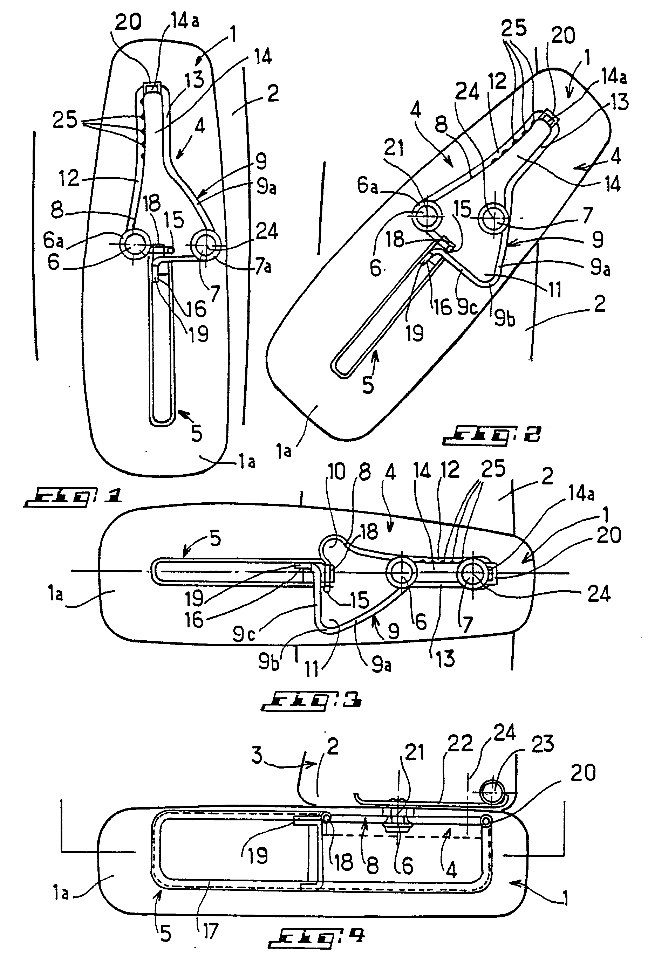

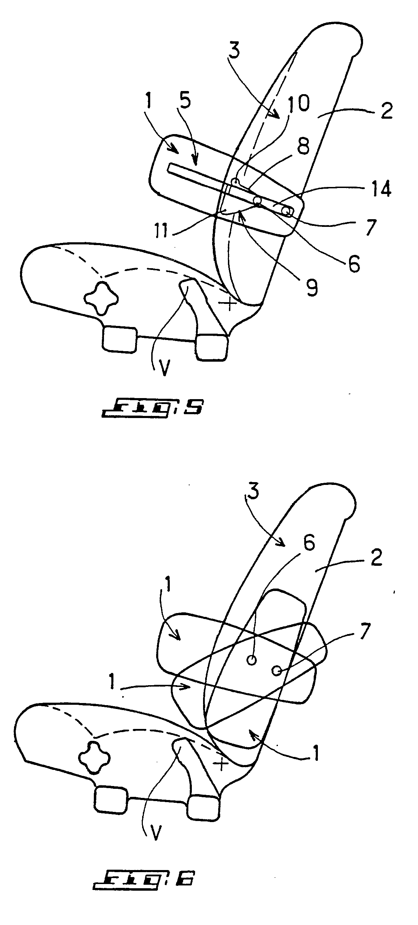

Le ressort en forme d'épingle 4 comporte, du côté ouvert de l'épingle, deux branches 8, 9 divergentes et cintrées de manière à former chacune un logement provisoire 10, 11 pour les galets 6 et 7 respectivement. Ces deux branches 8 et 9 forment, du côté fermé de l'épingle 4, une pince à brins 12, 13 sensiblement parallèles définissant un couloir ou une piste 14 de translation pour les deux galets 6 et 7, comme on le voit bien sur la figure 3.

L'extrémité libre de la branche 8, ou première branche, forme une sorte de crochet 15 attelé à l'armature 5. La branche divergente 9, ou deuxième branche, comporte une partie en forme de rampe curviligne 9a qui se développe à partir du couloir 14, laquelle partie est coudée en 9b pour former le logement provisoire 11 pour le galet 7, et se prolonge par une partie 9c qui remonte en direction de l'extrémité 15 de la branche 8 et qui se termine par un crochet ou bec 16 attelé, comme le crochet 15, à l'armature 5.

Cette dernière, comme on le voit bien sur la figure 4, présente la forme d'un cadre annulaire 17 noyé dans l'accoudoir 1 et situé dans un plan perpendiculaire au plan qui contient l'élément déformable en forme d'épingle 4.

Cet élément est fixé en trois points sur le cadre 17 au moyen d'attaches enveloppantes qui peuvent être d'un type quelconque sans sortir du cadre de l'invention. Plus précisément, l'extrémité en crochet 15 de la première branche 8 est attelée sur l'armature ou cadre 5 par l'intermédiaire d'une attache 18, et on notera ici que l'extrémité 15, tout en restant attelée à l'armature 5, pourra se débattre dans l'attache 18 lors de l'écartement ou du rapprochement des branches 8 et 9 sous l'effet des galets 6 et 7 lorsqu'on fait pivoter l'accoudoir 1, comme on l'expliquera plus loin. L'extrémité en forme de crochet 16 de la deuxième branche 9 est fixée de la même façon au cadre 17 formant l'armature 5, par l'intermédiaire d'une autre attache enveloppante montrée schématiquement en 19. Enfin, une troisième attache ou patte enveloppante 20 sert d'attelage à l'extrémité fermée 14a du couloir 14 sur l'armature 5.

Comme il apparaît clairement sur la figure 4, l'épingle déformable 4 constitue un segment du cadre 17, c'est-à-dire que l'élément 4 assure en quelque sorte la continuité de la périphérie du cadre 17. Celui-ci est représenté comme ayant une forme sensiblement rectangulaire, mais on pourrait très bien utiliser toute autre forme sans sortir du cadre de l'invention. A cet égard, on voit clairement sur la figure 4 que l'épingle déformable 4 assure la continuité du rectangle du cadre au niveau de l'un des grands côtés de ce rectangle.

Le galet 6 ou premier galet est monté à rotation par exemple sur un axe 21 solidaire d'une platine 22 fixée sur l'armature 23 du dossier 3 du siège. Le galet 7, ou deuxième galet, est également monté à rotation sur un axe 24 solidaire lui aussi de la platine 22 et disposé derrière le premier galet 6 suivant un alignement sensiblement horizontal.

Suivant l'exemple de réalisation représenté, l'épingle 4 est constituée par un ressort filiforme présentant une section transversale circulaire, tandis que les galets 6 et 7 comportent une gorge périphérique 6a, 7a susceptible d'épouser ladite section. Mais on pourrait parfaitement imaginer pour l'épingle 4 une section autre que circulaire, ladite épingle pouvant par exemple présenter la forme générale d'une lame élastique. De même, le cadre 17 formant l'armature 5 peut être réalisé à partir d'un profilé en U ou bien à partir d'un autre élément de forme ou de section quelconque.

Comme on le voit bien sur les figures 1 à 3, l'un des brins parallèles formant la piste ou couloir 14 pour les deux galets 6, 7 comporte une pluralité de crans d'arrêt 25 permettant à l'utilisateur de choisir la position de service désirée de l'accoudoir.

On expliquera maintenant le montage et le fonctionnement de l'accoudoir qui vient d'être décrit en se reportant plus particulièrement aux figures 1 à 3.

Pour le montage, on présente l'accoudoir en position verticale sur le flanc 2 du dossier 3, et on engage le galet 7 à l'intérieur du périmètre de l'épingle 4 de telle sorte que ledit galet soit positionné dans le coude 9b de la deuxième branche 9. On notera ici que l'entr'axe entre les deux galets 6 et 7 est par construction supérieur à celui existant entre les centres du logement 10 et du logement 11 formé par le coude 9b, de sorte qu'en exerçant une pression latérale sur l'accoudoir on déformera légèrement l'épingle 4 dont les extrémités 15, 16 solidaires de l'armature 5 peuvent se débattre légèrement comme on l'a expliqué plus haut, si bien que, finalement, le galet 6 pourra s'enclencher dans le logement 10 de la première branche 8. Ainsi, l'épingle 4 solidaire de l'armature 5 et exerçant par ses deux branches 8 et 9 une pression sur les deux galets 6 et 7 au niveau d'une ligne passant par leurs centres, maintient fermement l'accoudoir 1 en position verticale et escamotée, comme représenté sur la figure 1.

A partir de cette position escamotée, une gamme étendue de possibilités de positionnement de l'accoudoir est offerte à l'utilisateur, tant sur le plan des réglages en translation que sur celui des inclinaisons.

Ainsi, en soulevant l'extrémité 1a de l'accoudoir 1' l'utilisateur fera basculer l'accoudoir autour du premier galet 6, tandis que, simultanément, la branche 9 de l'épingle 4 sera mise en contrainte par le deuxième galet 7 roulant sur la rampe curviligne 9a de ladite branche pour finalement permettre à l'accoudoir de rester dans la position inclinée désirée par rapport au dossier du siège.

C'est ainsi qu'on voit sur la figure 2 l'accoudoir 1 stabilisé en position intermédiaire entre la position escamotée et de service, une telle position intermédiaire permettant d'atteindre aisément le frein à main du véhicule ou le verrou de la ceinture de sécurité.

En soulevant encore l'accoudoir 1 à partir de la position visible sur la figure 2, le deuxième galet 7 se situera au droit du couloir 14 défini par les brins parallèles 12 et 13 de l'épingle 4, et les contraintes exercées sur les branches de l'épingle au cours de ce mouvement et provoquant une modification de l'écartement desdites branches seront en quelque sorte absorbées par la légère liberté de mouvement des extrémités ou crochets 15 et 16 dans leurs attaches ou pattes respectives 18 et 19 pratiquées sur le cadre 17 de l'armature 5.

On comprend qu'il suffit à ce stade d'exercer une simple action longitudinale en extrémité de l'accoudoir pour provoquer simultanément l'engagement du deuxième galet 7 dans le couloir 14 et le déboîtement du premier galet 6 hors de son logement 10, et cela jusqu'à ce que les deux galets 6 et 7 soient dans le couloir 14, comme on l'a représenté sur les figures 3 et 5, ce qui correspond à la position active ou de service de l'accoudoir 1. On remarquera que, sur ces deux figures, le deuxième galet 7 est en butée sur l'extrémité fermée 14a du couloir 14, tandis que le premier galet 6 est engagé au niveau de l'embouchure de ce couloir, de sorte que l'accoudoir 1 se trouve en position d'équilibre stable.

Mais des positions intermédiaires stables peuvent être obtenues à tout instant grâce au crantage 25, comme on l'a expliqué précédemment.

On a représenté sur la figure 6 diverses positions pour l'accoudoir 1, lesquelles correspondent d'ailleurs sensiblement à celles représentées sur les figures 1, 2 et 3. On notera que la position horizontale de service de l'accoudoir visible sur cette figure 6 est telle que le deuxième galet 7 est un peu éloigné du fond 14a de l'épingle 4. En d'autres termes, l'extrémité arrière de l'accoudoir 1 est plus en retrait par rapport au dossier 2 du siège, comparativement à la position d'accoudoir représentée sur la figure 3.

Ceci permet donc de dire que l'engagement des deux galets 6 et 7 à l'intérieur du couloir 14 n'est pas indispensable pour satisfaire aux conditions d'utilisation de l'accoudoir. En effet, le porte-à-faux de mise en charge est générateur d'un couple rabattant ayant pour résultat d'appliquer la branche 8 de l'épingle 4 sur le premier galet 6, de sorte que l'accoudoir 1 bénéficie ainsi d'une "assiette" constante et correspondant sensiblement à la valeur de l'extr'axe des deux galets 6 et 7.

On insistera encore ici sur le fait qu'on peut choisir une position intermédiaire d'inclinaison quelconque, telle que celle visible sur la figure 2 ou la figure 6, étant entendu que dans cette position résultant de la coopération du galet 7 avec la rampe curviligne 9a de la branche 9, l'accoudoir 1 se trouvera bien entendu dans un état d'équilibre instable.

On a donc réalisé selon l'invention un mécanisme d'articulation pour accoudoir de siège qui est d'une conception mécanique particulièrement simple et basée essentiellement sur la forme particulière d'un ressort en forme d'épingle coopérant avec deux galets, ce mécanisme étant peu coûteux et d'un fonctionnement remarquablement fiable.

Bien entendu, l'invention n'est pas limitée au mode de réalisation décrit et illustré qui n'a été donné qu'à titre d'exemple.

C'est ainsi que la section de l'élément déformable en forme d'épingle pourrait être quelconque de même que le nombre et la section des galets coopérant avec le périmètre interne de cet élément. On pourrait aussi utiliser des organes autres que des galets.

## Revendications

1. Accoudoir réglable et escamotable monté à rotation sur un dossier de siège pour véhicule par exemple et ce par l'intermédiaire de moyens d'articulation revêtant la forme de deux organes solidaires du flanc de dossier du siège et d'un élément élastique permettant à l'accoudoir de prendre notamment une position de service et une position éclipsée le long du dossier, caractérisé en ce que lesdits moyens d'articulation comprennent d'une part un élément élastiquement déformable en forme de boucle ouverte ou d'épingle (4) comportant du côté ouvert deux branches divergentes cintrées ou courbées (8, 9) attelées à une armature (5) noyée dans l'accoudoir (1) avec ledit élément (4), et d'autre part deux organes, tels que par exemple deux galets (6, 7), solidaires du flanc (2) de dossier du siège (3) et susceptibles de coopérer avec l'intérieur des deux branches divergentes (8, 9) de l'élément déformable en forme d'épingle (4) sous l'effet de la rotation et de la translation de l'accoudoir (1) en vue de permettre son réglage et son escamotage.

2. Accoudoir selon la revendication 1, caractérisé en ce que les deux branches divergentes cintrées ou courbées (8, 9) forment respectivement du côté ouvert de l'épingle (4) un logement provisoire (10, 11) pour le premier (6) et le deuxième (7) galets, et forment du côté fermé de l'épingle (4) une pince à brins sensiblement parallèles (12, 13) définissant un couloir ou une piste (14) de translation pour les deux galets (6, 7).

3. Accoudoir selon la revendication 1 ou 2, caractérisé en ce que les extrémités libres (15, 16) des deux branches précitées (8, 9) sont attelées à l'armature (5) avec un certain degré de liberté de mouvement par rapport à cette armature, tandis que l'extrémité fermée (14a) de l'épingle (4) ou du couloir précité (14) est elle aussi fixée à ladite armature.

4. Accoudoir selon l'une des revendications 1 à 3, caractérisé en ce que l'armature (5) et l'élément en forme d'épingle (4) sont respectivement situés dans deux plans orthogonaux.

5. Accoudoir selon l'une des revendications précédentes, caractérisé en ce que l'armature précitée (5) présente la forme d'un cadre annulaire (17) dont un segment est constitué par l'élément précité en forme d'épingle (4) attaché à ce cadre par les extrémités libres (15, 16) des branches (8, 9) de l'épingle d'une part et par l'extrémité fermée (14a) du couloir précité (14) d'autre part.

6. Accoudoir selon l'une des revendications précédentes, caractérisé en ce qu'au moins l'un (12) des brins parallèles du couloir précité (14) est pourvu de crans d'arrêt (25) permettant de choisir la position de service désirée de l'accoudoir.

7. Accoudoir selon l'une des revendications 2 à 5, caractérisé en ce que la fixation au cadre (17) des extrémités (15, 16, 14a) des branches et de la piste ou couloir (14) de l'épingle (4), est assurée par des pattes enveloppantes (18, 19).

8. Accoudoir selon l'une des revendications précédentes, caractérisé en ce que l'élément en forme d'épingle (4) est constitué par un ressort présentant de préférence une section transversale circulaire, tandis que les deux galets (6, 7) comportent une gorge périphérique (6a, 7a) épousant ladite section.

9. Siège dont le dossier est équipé d'au moins un accoudoir latéral selon l'une des revendications précédentes.

## Patentansprüche

1. Einstellbare und einziehbare Armlehne, die drehbar an einer Sitzlehne für ein Fahrzeug zum Beispiel angebracht ist und dies über Anlenkmittel, welche die Gestalt von zwei an der Seite der Rückenlehne des Sitzes befestigten Gliedern und einem elastischen Element annehmen, welche der Armlehne gestatten, insbesondere eine Verwendungsstellung und eine entlang der Rückenlehne eingezogene Stellung anzunehmen, dadurch gekennzeichnet, daß die besagten Anlenkmittel einerseits ein elastisch verformbares Element in der Gestalt einer offenen Schleife oder Haarnadel (4) mit zwei gebogenen bzw. gekrümmten divergierenden Schenkel (8, 9), welche mit einer zusammen mit dem besagten Element (4) in der Armlehne (1) eingebeteten Einlage (5) verbunden sind und andererseits zwei Glieder wie z.B. zwei Rollen (6, 7) aufweisen, welche an der Seite (2) der Rückenlehne des Sitzes (3) angebracht sind und mit dem Inneren der beiden divergierenden Schenkel (8, 9) des verformbaren als Haarnadel gestalteten Elementes (4) unter der Wirkung der Verdrehung und der Verschiebung der Armlehne (1) zusammenwirken können, um ihre Einstellung und ihre Einziehung zu gestatten.

2. Armlehne nach Anspruch 1, dadurch gekennzeichnet, daß beide divergierende, gebogene bzw. gekrümmte Schenkel (8, 9) jeweils zur offenen Seite der Haarnadel (4) zu, eine vorläufige Aufnahme (10, 11) für die erste (6) und die zweite (7) Rolle bilden und zur geschlossenen Seite der Haarnadel (4) zu eine Zange mit etwa parallelen Backen (12, 13), welche eine Verschiebungsrinne -bzw. laufbahn (14) für beide Rollen (6, 7) abgrenzen, bilden.

3. Armlehne nach Anspruch 1 oder 2, dadurch gekennzeichnet, daß die freien Enden (15, 16) der beiden besagten Schenkel (8, 9) an der Einlage (5) mit einem gewissen Bewegungsfreiheitsgrad gegenüber dieser Einlage angeschlossen sind, während das geschlossene Ende (14a) der besagten Haarnadel (4) bzw. der besagten Rinne (14) selbst auch an der besagten Einlage befestigt ist.

4. Armlehne nach einem der Ansprüche 1 bis 3, dadurch gekennzeichnet, daß die Einlage (5) und das als Haarnadel ausgebildete Element (4) jeweils in zwei orthogonalen Ebenen liegen.

5. Armlehne nach einem der vorangehenden Ansprüche, dadurch gekennzeichnet, daß die besagte Einlage (5) die Gestalt eines ringförmigen Rahmens (17) aufweist, von welchem ein Segment durch das besagte als Haarnadel gestaltete Element (4) gebildet ist, welches an diesem Rahmen mit den freien Enden (15, 16) der Schenkel (8, 9) der Haarnadel, einerseits und mit dem geschlossenen Ende (14a) der besagten Rinne (14) andererseits angebracht ist.

6. Armlehne nach einem der vorangehenden Ansprüche, dadurch gekennzeichnet, daß wenigstens einer (12) der parallelen Schenkel der besagten Rinne (14) mit die Wahl der gewünschten Dienststellung der Armlehne ermöglichenden Rasten (25) versehen ist.

7. Armlehne nach einem der Ansprüche 2 bis 5, dadurch gekennzeichnet, daß die Befestigung an dem Rahmen (17) der Enden (15, 16, 14a) der Schenkel und der Laufbahn bzw. Rinne (14) der Haarnadel (4) durch umgreifende Ansätze (18, 19) gewährleistet wird.

8. Armlehne nach einem der vorangehenden Ansprüche, dadurch gekennzeichnet, daß das als Haarnadel ausgebildete Element (4) aus einer vorzugsweise einen kreisförmigen Querschnitt aufweisenden Feder besteht, während die beiden Rollen (6, 7) eine an den besagten Querschnitt angepasste Umfangsrille (6a, 7a) aufweisen.

9. Sitz dessen Rückenlehne mit wenigstens einer Seitenarmlehne gemäß einem der vorangehenden Ansprüche ausgerüstet ist.

## Claims

1. Adjustable and retractable arm-rest rotatably mounted on a back of a seat for a vehicle, for instance and this through the medium of pivot means assuming the shape of two members made fast with the side of the back of the seat and of a resilient element allowing the arm-rest to take in particular a working position and a position retracted along the back, characterized in that the said pivot means comprise on the one hand an elastically deformable element shaped as an open loop or hairpin (4) comprising towards the open side two bent or curved diverging legs (8, 9) coupled to a strap (5) embedded into the arm-rest (1) together with the said element (4) and on the other hand, two members such for instance as two rollers (6, 7) secured to the side (2) of the back of the seat (3) and likely to cooperate with the inside of both diverging legs (8, 9) of the hairpin-shaped deformable element (4) under the effect of the rotation and of the translatory motion of the arm-rest (1) with a view to allow its adjustment and its retracting.

2. Arm-rest according to claim 1, characterized in that both bent or curved diverging legs (8, 9) form towards the open side of the hairpin (4), respectively, a provisional recess (10, 11) for the first (6) and the second (7) rollers and form towards the closed side of the hairpin (4) a clip with substantially parallel prongs (12, 13) defining a translatory motion channel or race (14) for both rollers (6, 7).

3. Arm-rest according to claim 1 or 2, characterized in that the free ends (15, 16) of both aforesaid legs (8, 9) are coupled to the strap (5) with some degree of freedom of motion with respect to this strap, whereas the closed end (14a) of the aforesaid hairpin (4) or channel (14) is itself also secured to the said strap.

4. Arm-rest according to one of claims 1 to 3, charactérized in that the strap (5) and the hairpin shaped element (4) are located in two orthogonal plans, respectively.

5. Arm-rest according to one of the foregoing claims, characterized in that the aforesaid strap (5) exhibits the shape of an annular frame (17) one segment of which is constituted by the aforesaid hairpin-shaped element (4) fastened to this frame by the free ends (15, 16) of the legs (8, 9) of the hairpin, on the one hand, and by the closed end (14a) of the aforesaid channel (14), on the other hand.

6. Arm-rest according to one of the foregoing claims, characterized in that at least one (12) of the parallel prongs of the aforesaid channel (14) is provided with stop notches (25) allowing to select the desired working position of the arm-rest.

7. Arm-rest according to one of claims 2 to 5, characterized in that the fastening to the frame (17) of the ends (15, 16, 14a) of the legs and of the race or channel (14) of the hairpin (4) is provided by enclosing lugs (18, 19).

8. Arm-rest according to one of the foregoing claims, characterized in that the hairpin-shaped element (4) consists of a spring preferably exhibiting a circular cross section, whereas both rollers (6, 7) comprise a peripheral groove (6a, 7a) conforming to the said section.

9. Seat the back of which is fitted with at least one lateral arm-rest according to one of the foregoing claims.

FIG. 1

FIG. 2

FIG. 3

FIG. 4

1

FIG. 5

FIG. 6